**Europäisches Patentamt**

**European Patent Office**

**Office européen des brevets**

(19)

(11) Publication number : **0 417 172 B1**

(12) # EUROPEAN PATENT SPECIFICATION

(45) Date of publication of patent specification :
18.03.92 Bulletin 92/12

(51) Int. Cl.⁵ : **F16K 11/052, B60H 1/00**

(21) Application number : **89906623.7**

(22) Date of filing : **24.05.89**

(86) International application number :
**PCT/US89/02283**

(87) International publication number :
**WO 89/11610 30.11.89 Gazette 89/28**

(54) **HEATER CONTROL VALVE.**

(30) Priority : **26.05.88 US 199216**
**19.09.88 US 246580**

(43) Date of publication of application :
**20.03.91 Bulletin 91/12**

(45) Publication of the grant of the patent :
**18.03.92 Bulletin 92/12**

(84) Designated Contracting States :
**DE FR GB**

(56) References cited :
**EP-A- 0 174 800**
**FR-A- 2 131 514**
**GB-A- 839 957**
**US-A- 4 273 157**

(56) References cited :
**US-A- 4 281 686**
**US-A- 4 361 170**
**US-A- 4 373 666**
**Patent Abstracts of Japan, vol. 9, no. 191**
**(M-402)(1914), 7 August 1985, & JP,A, 6056624**
**(TAIHEIYOU K.K.K.) 2 April 1985**

(73) Proprietor : **SIEMENS**
**AKTIENGESELLSCHAFT**
**Wittelsbacherplatz 2**
**W-8000 München 2 (DE)**

(72) Inventor : **DEJONG, Allan, Wayne**
**34 English Road**
**Chatham, Ontario N7M 4H7 (CA)**
Inventor : **PERRY, Paul, Douglas**
**82 Gladstone Avenue**
**Chatham, Ontario N7L 2C3 (CA)**

## Description

### BACKGROUND AND SUMMARY OF THE INVENTION

The present invention relates generally to flow control valves and more particularly to a flow control valve which regulates coolant flow to a heater core (See e.g. US-A-4 361 170).

Heater cores such as those used in automotive vehicles receive hot coolant from the engine. The rate of coolant flow is proportional to engine speed (rpm). It is known that over the life of a vehicle the coolant may be contaminated with particles of grit, rust, etc. which also flow through the core. In order to increase the useful life of the heater core and protect it, it is necessary to limit the flow rate of the coolant through the heater core to reduce erosion due to the impact of the particles with portions of the core. Further, during the useful life of the heater core sediment within the coolant may accumulate on the various internal passages of the heater core which tends to restrict the flow of coolant therethrough. Consequently, as the heater core ages the pressure drop across the core increases. It is also useful to limit the maximum flow rate of coolant through the heater core to maintain the pressure within the core at reasonable levels otherwise the core may flex, leak or fatigue prematurely. It has been found that if the flow rate of coolant is restricted to approximately 5-6 gallons/minute (19-23 liters per minute) heater core useful life can be increased. The above relationship has been appreciated for some time. Current heating systems utilize a rubber orifice flow control washer. This device provides a restriction at all flow rates. As the flow pressure increases the rubber compresses causing the flow area (orifice diameter) to decrease thus limiting the flow to the required amount. While the rubber orifice functions to limit the maximum flow rate of coolant, it also provides a significant restriction to the flow of coolant at lower engine rpm thus restricting the amount of coolant communicated to the heater and reducing its performance.

It is an object of the present invention to provide a flow control valve for a heater core which maximizes flow at low engine rpm and which limits coolant flow to approximately 6 gallons per minute at high engine rpm. Another object of the present invention is to controllably terminate coolant flow to the heater core under certain conditions such as when maximum air conditioning performance is required.

Accordingly, the invention comprises: a heater control valve comprising: a valve body defining a chamber and a bypass passage extending therefrom, first conduit means in fluid communication with the bypass passage for defining a first inlet port adapted to receive coolant and a first exit port adapted to communicate coolant to an external device such as a heater core, including flow diverter means to urge coolant to flow into the diverter passage. The control valve further comprising second conduit means, in communication with the chamber for defining a second inlet adapted to receive flow from the external device and a second outlet. The valve body further includes a first seating surface disposed about an upstream end of the bypass passage and a second seating surface disposed about the second inlet. A bypass valve, located in the valve body, is rotatable from a first position in sealing engagement with the first seating surface to a second position in sealing engagement with the second seating surface and, includes a hinge pin extending from the valve body; and actuator means for rotating the hinge pin and bypass valve from the first position to the second position in response to control signals and for generating a bias force upon the bypass valve to maintain same in sealing engagement with the first seating surface below coolant flow rates less than a predetermined level wherein the bypass valve is permitted to rotate against the bias force, under the action of the fluid force generated by the diverted coolant to regulate coolant flow at the first outlet at the predetermined level.

Many other objects and purposes of the invention will be clear from the following detailed description of the drawings.

### BRIEF DESCRIPTION OF THE DRAWINGS

### IN THE DRAWINGS

FIGURE 1 is a cross-sectional view of one embodiment of a flow control valve constructed in accordance with the present invention and is taken along line 1-1 in FIGURE 4.

FIGURE 1a illustrates a portion of the flow control valve.

FIGURE 1b illustrates a bottom view of a cap.

FIGURE 2 illustrates a side elevational view of the flow valve.

FIGURE 3 illustrates a top elevational view of the flow valve.

FIGURE 4 illustrates a right side elevational view of the flow valve.

FIGURE 5 illustrates an alternate embodiment of the present invention.

FIGURES 6 through 9 illustrate various views of a bypass valve used in the above flow valves.

FIGURE 10 illustrates a flow rate to the heater core vs rpm curve.

FIGURES 11 and 11a illustrate an alternate embodiment of the invention.

FIGURE 12 illustrates still another embodiment of the invention.

FIGURE 13 is a view similar to FIGURE 1 of a further embodiment.

FIGURES 14 and 15 are two views of one of the parts used in the embodiment of FIGURE 13.

## DETAILED DESCRIPTION OF THE DRAWINGS

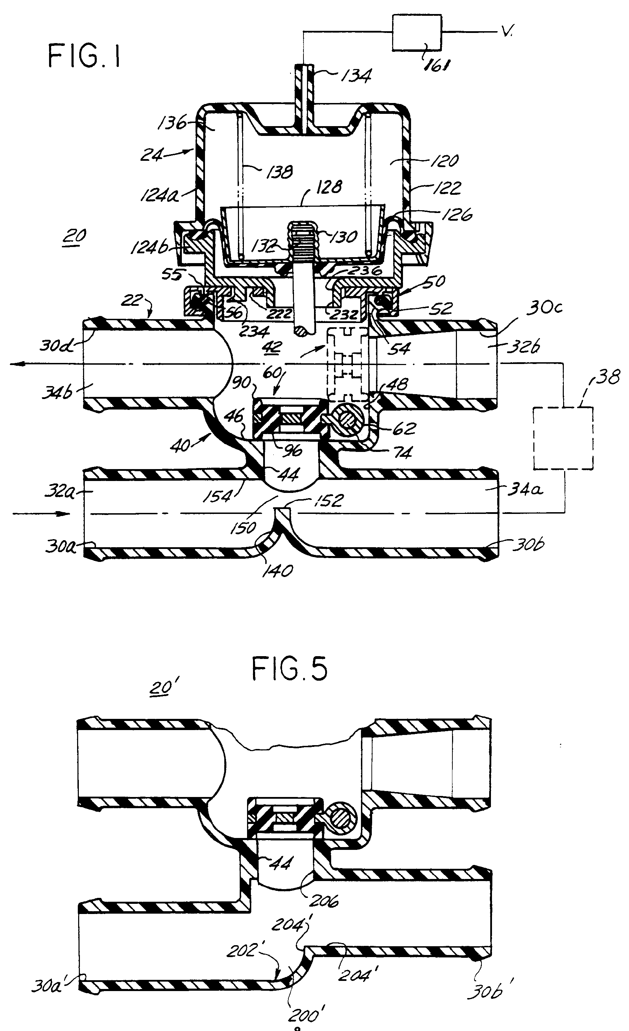

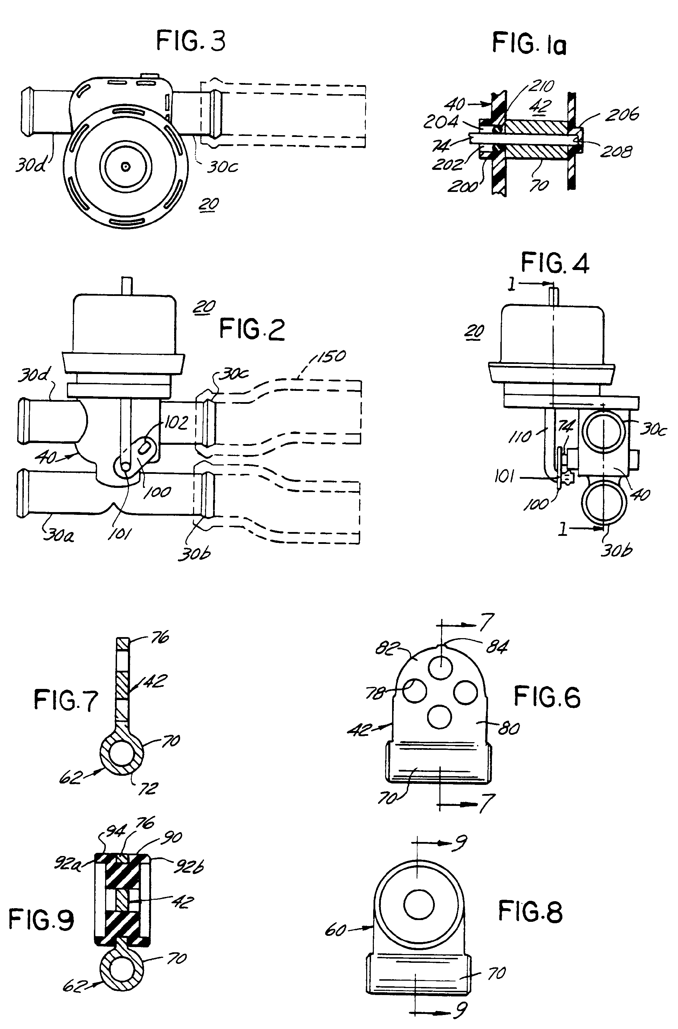

With regard to FIGURES 1-4 there is illustrated a flow valve generally shown as 20. The flow valve 20 comprises a valve body 22 and an actuator assembly 24. Only a portion of the actuator assembly 24 is shown in FIGURE 1 since it extends forward of the valve body (see FIGURE 4). The valve body includes a plurality of tubes or conduits connected in a "H" configuration. Lower tubes 30a and 30b are connected to the upper tubes 30c and 30d via a bypass body section generally illustrated as 40. The bypass body section 40 includes a central cavity 42 in direct communication with the tubes 30c and 30d. The valve 20 further includes a cap 50 which comprises a generally rectangular first portion 52 which may be snap-fit about a shoulder 54 formed about the upper portion of the bypass body section to enclose the cavity 42. Appropriate sealing such as a rubber gasket or O-ring 56 may be used to enhance the seal. The O-ring 56 may be pressed by a bead 55. The cap 50 further includes a second portion 58 which extends from the first portion to cantilever mount the actuator assembly. The second portion includes a central opening 220, to receive a stem 110 of the actuator assembly, and a plurality of arcuate openings 222 positioned thereabout.

The bypass body section further includes a bypass passage 44 in communication with tubes 30a and 30b. The lower portion of the chamber 42 proximate the bypass passage 44 defines a seating surface 46. Similarly the portion of the bypass body section proximate the innermost portion of tube 30c defines a second seating surface 48. The tubes 30a and 30b essentially form a single conduit forming at one end a first inlet 32a and at another end a first outlet 34a. Tubes 30c and 30d define another conduit having a second inlet 32b and outlet 34b. The inner diameter of tube 30c may be tapered from the second inlet 32b to the second seating surface 48.

Rotatably secured within the bypass body section 40 is a bypass valve generally shown as 60. The bypass valve 60 includes a door hinge 62 (shown in greater detail in FIGURES 6 and 7) and the two rotate as a unit. As can be seen more clearly in FIGURES 6 and 7, the door hinge includes a cylindrical eyelet portion 70 defining an opening 72 for receipt of a hinge pin 74 (shown more clearly in FIGURES 1 and 4). Extending from the eyelet portion 70 is a relatively flat member 76 comprising a plurality of openings 78 the purpose of which will be described below. The flat member 76 comprises a generally rectangular portion 80 extending from the eyelet 70 and a generally semicircular portion 82. The diameter of the semicircular portion may be slightly less than the width of the rectangular portion 80. The semicircular portion 82 further includes at least one protuberance 84.

The bypass body section, as shown in FIGURE 1a, includes a first cylindrical projection 200 defining a stepped bore 202 and opening 204. Positioned oppositely is a second cylindrical projection 206 defining a blind bore 208. During fabrication of the valve 20 the bypass valve 60 is inserted into the chamber 42 and aligned to the opening 204. The hinge pin 74 with an O-ring 210 is inserted into the stepped bore 208. The hinge pin 74 may include a serrated edge or similar connecting means, which engages the eyelet 70.

The bypass valve 60 further includes a resilient sealing member 90 shown in FIGURES 1, 8 and 9. The sealing member 90 includes oppositely extending annular sealing surfaces 92a and 92b. The sealing member 90 may be injection moulded to the door hinge 62 such that the resilient material fills the openings 78 thereby securing the resilient material thereto. As mentioned above, the sealing member 90 has a generally circular profile and it is desirable that the outer edge 94 of the member 90 be formed essentially tangential to the protuberance 84 of the door hinge 80.

The door hinge 62 is rotatable with the hinge pin 74 which extends through the bypass body section 40. Attached to one end of the hinge pin 74 is a bell crank lever 100. The bell crank lever may include an opening 102 of prescribed shape to receive a similarly formed end of the hinge pin 74. The bell crank lever 100 further includes another opening 101 to receive a portion of an actuator stem 110.

As mentioned above, the valve 20 includes an actuator assembly 24. As illustrated in the accompanying figures, the actuator assembly comprises a vacuum motor 120 comprising a multipart housing 122 (housing portions 124a and 124b) which secure therebetween a rolling diaphragm 126. The lower housing portion 124b is adapted to be supported by the cap 50. More particularly the lower housing portion 124b includes a flange and opening 232 received into the opening 220 of the cap 50. In addition the lower housing portion 124b includes a plurality of barbs 214 adapted to fit into the openings 222 thereby securing the actuator assembly 24 to the cap 50. While a vacuum motor 120 is shown it should be appreciated that electric actuators such as stepper motors or solenoids can be used to actuate the stem 110.

Attached to the upper side of the diaphragm is a cup-shaped piston 128 comprising a threaded bore 130 adapted to receive one end 132 of the stem 110.

The vacuum motor 120 further includes a vacuum inlet port 134 adapted to communicate vacuum to a chamber 136 partially defined by the diaphragm 126. A spring 138 biases the diaphragm 126 and stem 110 downwardly in a manner to urge the bypass valve 60 to seat upon the seating surface 46 as illustrated in FIGURE 1.

With reference to FIGURE 1, the valve 20 may further include an optional flow director 140 positioned within the flow passage defined by tubes 30a and 30b and located such that coolant received at the inlet 32a will be diverted upwardly into the bypass passage 44. As illustrated in FIGURE 1 the diverter comprises an arcuately shaped portion of tubing, situated slightly left of center of the bypass passage 44, which extends perpendicular to the plane of the cross-section.

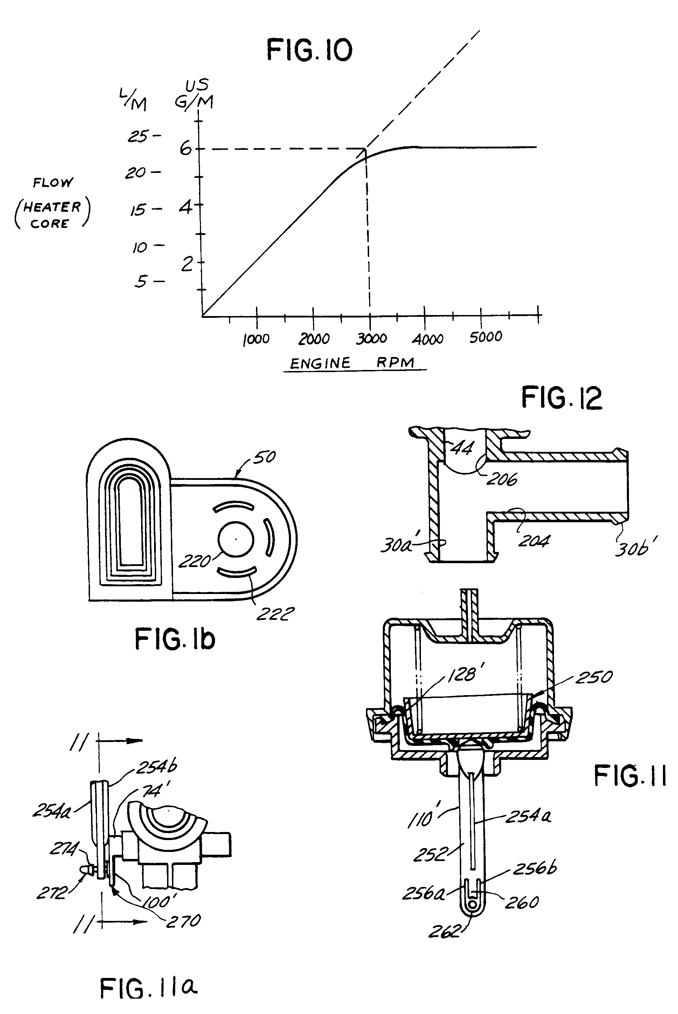

In operation coolant is pumped from the engine at a rate proportional to engine speed (see FIGURE 10), and is received at the inlet 32a. Some of the coolant impacts the diverter and a portion of the flow is diverted upwardly into passage 44 and thereafter out of the exit end 34a of tube 30b into the heater core 38. The flow from the heater core returns to the valve 20 through the inlet 32b of tube 30c and exits the valve 20, at 34b, and is communicated to a radiator. Communication to the engine core and radiator may be affected by utilizing rubber hoses 150 such as those shown in FIGURES 2 and 3. Without vacuum applied to the port 134, the spring 138 biases the stem 110 downwardly in a manner to urge the valve 60 to close the bypass passage 44. As engine speed increases the rate of fluid flow will increase through tube 30a as will the upward force of that portion of the coolant diverted into the bypass passage 44. The spring 138 in the vacuum valve 120 and the effective length of the bell crank lever have been set to maintain the valve 60 in its closed position for flow rates below approximately 5 gallons per minute. As the engine speed increases the pressure exerted on the lower face 96 of the valve 60 will cause it to rotate clockwise, as seen in FIGURE 1, against the bias force of the spring 138 thereby opening the bypass passage 44 regulating the coolant flow rate communicated to the core at approximately 5 to 6 gallons per minute. For many vehicles at maximum rpm, the engine will generate a coolant flow in the vicinity of 15 to 16 gallons per minute (see dotted line, FIGURE 10). In operation the valve 20 will limit the flow to the core at less than 6 gallons per minute while bypassing, through the bypass passage 44, up to 10 gallons per minutes.

At low engine rpm, that is, at engine rpm below the level that would cause the valve 60 to open, it is desirable that the valve 20 does not restrict the flow of fluid to the core 38. This is accomplished by sizing the flow area 150 between the top of the diverter 152 and sides 154 of tube 30a.

During engine operating conditions such as maximum air conditioning performance when it is desired to completely terminate flow through the heater core, engine vacuum is supplied to the vacuum port 134 through a control unit such as to an electric vacuum controller 161 of known variety. The vacuum so communicated to the vacuum motor 120 causes the diaphragm 126 and stem 110 to move upwardly thereby rotating the lever 100 and valve 60 to seat against the sealing surface 48 thereby prohibiting flow through the core 38. In this mode of operation all of the engine coolant is diverted to the radiator through the bypass passage 44.

As mentioned above, the diverter 140 is optional and can be eliminated from tubes 30a and 30b. In this configuration the fluid pressure in tubes 30a and 30b will increase in proportion to flow due to the flow restriction of the heater core. At a given flow rate fluid will be diverted into the bypass passage 44, to cause the diverter valve 60 to begin to open.

FIGURE 5 illustrates an alternate flow valve 20'. The valve 20' of FIGURE 5 is identical to that described in FIGURE 1 with the exception of the configuration of tubes 30'a and 30'b. More particularly, the center line of tube 30'a is located below the center line of tube 30'b such that the interior end 200' of tube 30'a may be formed with a continuous transition i.e. diverter 202' terminating at the inlet of tube 30'b. The diverter 202' may comprise a quarter circle of tubing which terminates at a downstream point 204' slightly to the right of the downstream wall 206' of the bypass passage 44. This diverts the water flow to impact the door to cause it to open. This effect increases as flow increases to cause more bypass at high rpm and less restriction at low rpm.

FIGURES 11 and 11a illustrate an alternate embodiment of the present invention. More particularly, the cup-shaped piston 128, having the threaded bore 130 to receive the stem 110, has been replaced by a single piece piston assembly 250. The piston assembly 250, preferably fabricated of plastic, includes piston 128' and integrally attached stem 110'. The stem 110' includes a flat section 252 including axially extending ribs 254a,254b to provide strength. The lower portion of the stem is bi-furcated at 256a,256b to define a flexible plastic member 260 and opening 262. FIGURE 11a illustrates an alternate hinge pin and bell crank configuration shown as 270. In this configuration, the bell crank lever 110' and hinge pin are integrally formed. The crank level 100' includes an outwardly extending pivot member or pin 272 which includes a barbed end 274. The barbed end 274 is adapted to be received within the opening 262 of the stem 110' and secured thereto by the flexible member 260.

FIGURE 12 shows a partial cross-sectional view of the lower portion of the valve 20. As can be seen, diverters such as 140 and 200 have been eliminated and the inlet 30'a substantially coaxially to the bypass passage 44. In operation coolant received at the inlet directly impacts the bypass valve 60 urging same off from its seat.

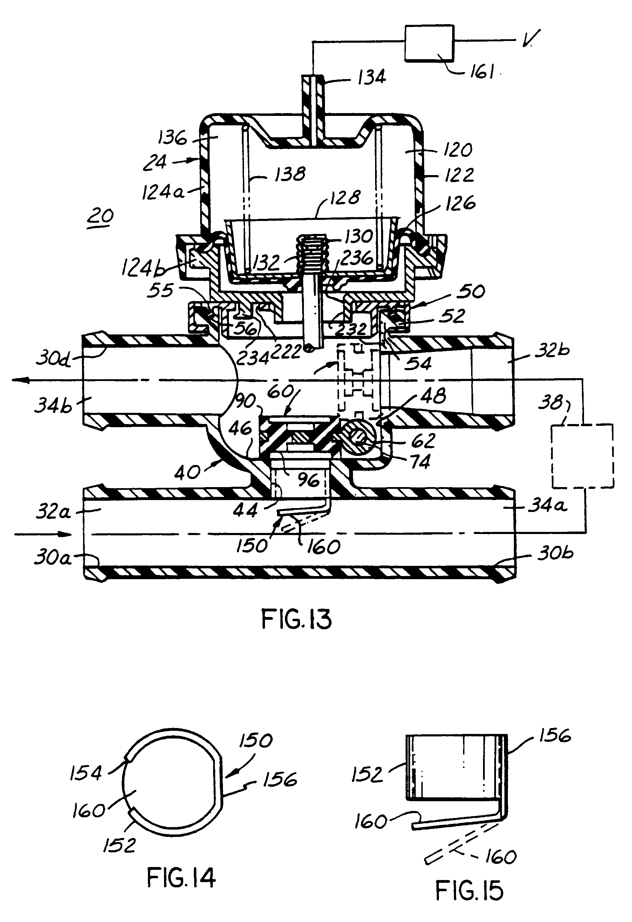

With reference to FIGURES 13-15, the valve 20 may further include a flexible disc shaped baffle, deflector or diverter 150. As illustrated in FIGURES 14 and 15 the baffle 150 comprises an upper substantially cylindrical member 152. The diverter or baffle 150 is preferably fabricated of a spring-like steel and the upper member 152 comprises an open side 154 and an opposite flat side 156. The diverter 150 is adapted to be slidably received within the bypass passage 44. The baffle 150 further includes a flexible deflector 160 integrally extending from the cylindrical portion 152. The deflector extends into the fluid stream within the lower tube 30 to divert fluid into the bypass passage. Due to the inherent resiliency of the deflector 160, it will bend downwardly, as illustrated (by the phantom lines) in FIGURES 13 and 15 in response to this increased flow.

In operation coolant is pumped from the engine at a rate proportional to engine speed, and is received at the inlet 32a. At low engine speed (low flow rate) the deflector will be maintained in an orientation such as illustrated (by the solid lines) in FIGURE 13 and consequently a relatively small amount of the fluid will impact the deflector 150 and be diverted upwardly into passage 44 and thereafter out of the outlet 34a of tube 30b into the heater core. The flow from the heater core returns to the valve 20 through the inlet 32b of tube 30c and exits the valve 20, at outlet 34b, and is communicated to a radiator. Communication to the heater core may be effected with rubber hoses or the like attached to the first outlet 34a and second inlet 32b. Communication to the radiator may similarly be obtained by connection to the second outlet 34b. Without vacuum applied to the port 134, the spring 138 biases the stem 110 downwardly in a manner to urge the valve 60 to close the bypass passage 44. As engine speed increases the rate of fluid flow will increase through tube 30a as will the upward force of that portion of the coolant diverted into the bypass passage 44. The spring 138 in the vacuum valve 120 and the effective length of the bell crank lever have been set to maintain the valve 60 in its closed position for flow rates below approximately 5 gallons per minute. As the engine speed increases, the fluid or coolant flow rate will similarly increase thereby further urging the deflector 160 (as mentioned above) to a lower position thereby permitting additional fluid to be diverted upwardly onto the lower face of the valve 60 thereby causing the valve 60 to rotate clockwise as viewed in FIGURE 13, against the bias force of the spring 30 thereby opening the bypass passage 44 regulating the coolant flow rate communicated to the core at approximately 5 to 6 gallons per minute. For many vehicles at maximum rpm, the engine will generate a coolant flow in the vicinity of 15 to 16 gallons per minute. In operation the valve 20 will limit the flow to the core at less than 6 gallons per minute while bypassing, through the bypass passage 44, up to 10 gallons per minutes.

At low engine rpm, that is, at engine rpm below the level that would cause the valve 60 to open, it is desirable that the valve 20 does not restrict the flow of fluid to the core 38. As can be seen from the above, this function is also accomplished by the deflector 160 since at low flow condition the deflector will attain its most streamlined orientation to the input flow thereby presenting a low restriction flow path for the fluid during this condition.

During engine operating conditions, such as maximum air conditioning performance when it is desired to completely terminate flow through the heater core, engine vacuum is supplied to the vacuum port 134 through a control unit such as to an electric vacuum controller 161 of known variety. The vacuum so communicated to the vacuum motor 120 causes the diaphragm 126 and stem 110 to move upwardly thereby rotating the lever 100 and valve 60 to seat against the sealing surface 48 thereby prohibiting flow through the core 38. In this mode of operation all of the engine coolant is diverted to the radiator through the bypass passage 44.

## Claims

1. A fluid control valve (24) comprising:
– first conduit means (30a, 30b) with a first inlet (30a) adapted to receive fluid and a first outlet (30b), adapted to communicate fluid to an external device (38);
– second conduit means (30c, 30d) with a second inlet (30c) adapted to receive flow from the external device (38) having a second outlet (30d);
– a second seating surface (48) disposed in the second conduit means (30c, d);
– a first seating surface (46) located in a by-pass passage (44) between the first inlet (30a) and the second outlet (30d) and downstream the second seating surface;
– a by-pass valve (60) operable between a first and a second position wherein the valve is in sealing engagement with the first and the second seating surfaces respectively;
– actuator means (24) operatively connected to said by-pass valve for rotating same between said first and second positions in response to a control signal;
characterised by
– the second conduit means having an essentially straight axis;
– the by-pass valve being a flap hinged at one side about an axis essentially perpendicular to the axis of the second conduit means, and
– means (138) for generating a bias force upon said by-pass valve to maintain same in sealing engagement with the first seating surface (46) below fluid rates less than a predetermined level and for permitting said by-pass valve (60) to rotate against said bias force to regulate fluid flow at the first outlet (30b).

2. A valve as defined in Claim 1 wherein a diverter means (140) is located in said first conduit means for diverting fluid into said by-pass passage in response to the fluid flow rates above the predetermined rate of flow.

3. The valve as defined in Claim 2 wherein said diverter means is a resilient diverter means (150) deflectable in response to fluid flow.

4. The valve as defined in Claim 3 wherein said resilient diverter means includes a hollow cylindrical member (152) adapted to be received into the by-pass passage, and a flexible plate (160) extending therefrom.

5. The valve as defined in Claim 1 wherein said by-pass valve (60) comprises hinge means, including a hinge pin, rotatable by the actuator means (24) and first and second spaced resilient seals (92a, 92b) rotatable therewith for respectively engaging the first and second seating surfaces.

6. The valve as defined in Claim 5 wherein said by-pass valve further comprises a first member (76) terminating at one end in an eyelet (70) adapted to receive and rotate with said hinge pin (74), and wherein said first and second resilient seals (92a, 92b) are annular and secured about said first member.

7. The valve as defined in Claim 5 wherein said hinge pin (74) is received within a stepped bore (202), extending through said valve body (22) to said chamber (42) and an oppositely situated blind bore (208) and wherein said hinge means includes a seal (210) for fluidly sealing said hinge pin and stepped bore (202).

8. The valve as defined in claim 2 characterised by

– the first conduit means (30a', 30b') having a first part being essentially coaxial with the by-pass passage (44) and a second part being essentially perpendicular to the axis of the first part.

**Patentansprüche**

1. Strömungsmittelregelventil (20) mit:
– einer ersten Leitung (30a, 30b) mit einem ersten Einlaß (30a) zur Aufnahme von Strömungsmittel und einem ersten Auslaß (30b) zur Abgabe von Strömungsmittel an eine externe Vorrichtung (38);
– einer zweiten Leitung (30c, 30d) mit einem zweiten Einlaß (30c) zur Aufnahme des Strömungsflusses von der externen Vorrichtung (38) und einem zweiten Auslaß (30d);
– einer zweiten Sitzfläche (48), die in der zweiten Leitung (30c, d) angeordnet ist;
– einer ersten Sitzfläche (46), die in einem Bypasskanal (44) zwischen dem ersten Einlaß (30a) und dem zweiten Auslaß (30d) stromab der zweiten Sitzfläche angeordnet ist;

– einem Bypassventil (60), das zwischen einer ersten und einer zweiten Position betreibbar ist, in denen das Ventil an der ersten bzw. zweiten Sitzfläche dichtend anliegt;
– Betätigungsmitteln (24), die mit dem Bypassventil funktionsmäßig verbunden sind, um es in Abhängigkeit von einem Regelsignal zwischen der ersten und zweiten Position zu verdrehen; dadurch gekennzeichnet,daß
– die zweite Leitung eine im wesentlichen gerade Achse hat;
– das Bypassventil eine Klappe ist, die auf einer Seite um eine Achse angelenkt ist, die im wesentlichen senkrecht zur Achse der zweiten Leitung verläuft, und
– Mittel (138) zum Erzeugen einer Vorspannkraft auf das Bypassventil vorgesehen sind, um es in dichtender Anlage mit der ersten Sitzfläche (46) unterhalb von Durchsätzen zu halten, die kleiner als ein vorgegebener Wert sind, und um eine Drehung des Bypassventils (60) entgegen der Vorspannkraft zu ermöglichen und somit den Strömungsfluß am ersten Auslaß (30b) zu regeln.

2. Ventil nach Anspruch 1, bei dem ein Ablenkmittel (140) in dem ersten Kanal angeordnet ist, um das Strömungsmittel bei Strömungsdurchsätzen oberhalb des vorgegebenen Strömungsdurchsatzes in den Bypasskanal abzulenken.

3. Ventil nach Anspruch 2, bei dem das Ablenkmittel ein elastisches Ablenkmittel (150) ist, das in Abhängigkeit von der Strömung ablenkbar ist.

4. Ventil nach Anspruch 3, bei dem das elastische Ablenkmittel ein hohles zylindrisches Teil (152), das im Bypasskanal aufnehmbar ist, und eine sich von diesem weg erstreckende flexible Platte (160) umfaßt.

5. Ventil nach Anspruch 1, bei dem das Bypassventil (60) ein Gelenk mit einem Gelenkzapfen, das durch die Betätigungsmittel (24) drehbar ist, sowie erste und zweite beabstandete elastische Dichtungen (92a, 92b) aufweist, die mit diesem drehbar sind, um sich an die erste bzw. zweite Sitzfläche anzulegen.

6. Ventil nach Anspruch 5, bei dem das Bypassventil ferner ein erstes Teil (76) aufweist, das mit einem Ende in einer Öse (70) endet, die den Gelenkzapfen (74) aufnehmen und sich mit diesem drehen kann, und bei dem die erste und zweite elastische Dichtung (92a, 92b) ringförmig ausgebildet und an dem ersten Teil befestigt sind.

7. Ventil nach Anspruch 5, bei dem der Gelenkzapfen (74) von einer Stufenbohrung (202) aufgenommen wird, die durch den Ventilkörper (22) zu der Kammer (42) und einer gegenüber angeordneten Sackbohrung (208) verläuft, und bei dem das Gelenk eine Dichtung (210) zum Abdichten des Gelenkzapfens und der Stufenbohrung (202) umfaßt.

8. Ventil nach Anspruch 2, dadurch gekennzeichnet, daß

– die erste Leitung (30a′, 30b′) einen zum Bypasskanal (44) im wesentlichen koaxialen ersten Teil und einen zur Achse des ersten Teils im wesentlichen senkrechten zweiten Teil aufweist.

## Revendications

1. Une vanne de commande de débit de fluide (20) comprenant :

– un premier conduit (30a, 30b) avec une première entrée (30a) conçue pour recevoir un fluide et une première sortie (30b), conçue pour transmettre le fluide vers un dispositif externe (38) ;

– un second conduit (30c, 30d) ayant une seconde entrée (30c) qui est destiné à recevoir un écoulement provenant du dispositif externe (38), et ayant une seconde sortie (30d) ;

– une seconde surface de siège (48) disposée dans le second conduit (30c, d) ;

– une première surface de siège (46) située dans un passage de dérivation (44) entre la première entrée (30a) et la seconde sortie (30d), et en aval de la seconde surface de siège ;

– une vanne de dérivation (60) que l'on peut actionner entre une première position et une seconde position dans lesquelles la vanne établit un contact étanche respectivement avec les première et seconde surfaces de siège ;

– des moyens actionneurs (24) accouplés fonctiomellement à la vanne de dérivation pour faire tourner cette demière entre les première et seconde positions, sous l'effet d'un signal de commande ;

caractérisée en ce que

– le second conduit a un axe pratiquement rectiligne ;

– la vanne de dérivation consiste en un volet dont un côté est articulé sur un axe pratiquement perpendiculaire à l'axe du second conduit ; et

– des moyens (138) sont incorporés pour générer une force qui sollicite la vanne de dérivation de façon à la maintenir en contact étanche avec la première surface de siège (46) pour des débits de fluide inférieurs à un niveau prédéterminé, et pour permettre à la vanne de dérivation (60) de tourner contre l'action de la force précitée qui la sollicite, afin de réguler le débit de fluide à la première sortie (30b).

2. Une vanne définie dans la revendication 1, dans laquelle des moyens de déviation (140) sont placés dans le premier conduit pour dévier le fluide de façon qu'il entre dans le passage de dérivation, sous l'effet de débits de fluide supérieurs au débit prédéterminé.

3. La vanne définie dans la revendication 2, dans laquelle les moyens de déviation sont constitués par des moyens de déviation à retour élastique (150) qui peuvent changer de position sous l'effet de l'écoulement de fluide.

4. La vanne définie dans la revendication 3, dans laquelle les moyens de déviation à retour élastique comprennent un élément cylindrique creux (152) qui est conçu pour être logé dans le passage de dérivation, et une plaquette flexible (160) qui s'étend à partir de cet élément.

5. La vanne définie dans la revendication 1, dans laquelle la vanne de dérivation (60) comprend des moyens à charnière, comportant un axe de charnière, qui peuvent tourner sous l'action des moyens actionneurs (24), et des premier et second joints d'étanchéité élastiques espacés (92a, 92b) qui peuvent tourner avec, pour venir respectivement en contact avec les première et seconde surfaces de siège.

6. La vanne définie dans la revendications, dans laquelle la vanne de dérivation comprend en outre un premier élément (76) qui se termine à une extrémité par un oeillet (70) conçu pour recevoir l'axe de charnière (74) et pour tourner avec ce dernier, et dans laquelle les premier et second joints d'étanchéité élastiques (92a, 92b) sont annulaires et sont fixés autour du premier élément.

7. La vanne définie dans la revendication 5, dans laquelle l'axe de charnière (74) est logé à l'intérieur d'un alésage à épaulement (202), traversant le corps de vanne (22) en direction de la chambre (42), et dans un alésage borgne (208) situé en regard, et dans laquelle les moyens à charnière comprennent un joint d'étanchéité (210) pour établir l'étanchéité, vis-à-vis du fluide, pour l'axe de charnière et l'alésage à épaulement (202).

8. la vanne définie dans la revendication 2, caractérisée en ce que :

– le premier conduit (30a′, 30b′) comporte une première partie qui est pratiquement coaxiale par rapport au passage de dérivation (44), et une seconde partie qui est pratiquement perpendiculaire à l'axe de la première partie.

FIG.1

FIG.5

8

FIG. 3

FIG. 1a

FIG. 2

FIG. 4

FIG. 7

FIG. 6

FIG. 9

FIG. 8

# FIG. 10

FLOW
(HEATER CORE)

ENGINE RPM

# FIG. 12

# FIG. 1b

# FIG. 11

# FIG. 11a

FIG.13

FIG.14

FIG.15